# EUROPEAN PATENT APPLICATION

(11) **EP 4 591 993 A1**
(43) Date of publication of application: **30.07.2025**
(21) Application number: 23867910.4
(22) Date of filing: 03.08.2023
(51) Int. Cl.: B05B 17/00, A45D 19/16, B01D 53/26, B01D 53/32, B01J 20/26, B01J 20/34

(54) **FINE WATER RELEASING DEVICE AND FINE WATER RELEASING METHOD**

(30) Priority: 21.09.2022 JP 2022150630
(71) Applicant: AISIN CORPORATION, Kariya-shi, Aichi 448-8650 (JP)
(72) Inventor: IMAMOTO, Yuka, Kariya-shi, Aichi 448-8650 (JP); HIRANO, Akiyoshi, Kariya-shi, Aichi 448-8650 (JP); YAMAGURO, Akira, Kariya-shi, Aichi 448-8650 (JP); YOKOYAMA, Keiko, Kariya-shi, Aichi 448-8650 (JP); TABATA, Yuki, Kariya-shi, Aichi 448-8650 (JP); KATO, Hiroto, Kariya-shi, Aichi 448-8650 (JP)
(74) Representative: Winter, Brandl - Partnerschaft mbB
(86) International application number: PCT/JP2023/028488
(87) International publication number: WO 2024/062784

(57) **Abstract**

A fine water particle release device includes: a fine water particle release element that includes a base material and an electrically conductive polymer membrane provided on the base material, and that changes to a moisture adsorbing state in which the electrically conductive polymer membrane adsorbs moisture in air and to a moisture desorbing state in which the electrically conductive polymer membrane desorbs the adsorbed moisture as fine water particles with a particle size of 50 nanometers or less; a supply unit that supplies energy to the fine water particle release element; and a control unit that executes moisture adsorption control for controlling the supply unit to supply first energy that brings the fine water particle release element to the moisture adsorbing state, and moisture desorption control for controlling the supply unit to supply second energy that raises a temperature of the fine water particle release element to a temperature higher than its temperature in the moisture adsorbing state to bring the fine water particle release element to the moisture desorbing state.

## Description

### TECHNICAL FIELD

The present disclosure relates to fine water particle release devices and fine water particle release methods.

### BACKGROUND ART

A fine water particle release device has been conventionally proposed that includes: a tubular case having an air channel; a moisture control unit having a fine water particle release element that is disposed in the channel and that adsorbs and desorbs moisture; an energizing unit that energizes a base material portion of the fine water particle release element; and a control unit that controls the energizing unit (see, for example, Patent Document 1). In this device, the energizing unit de-energizes the base material portion to lower the temperature of the fine water particle release element so that the fine water particle release element adsorbs moisture in air. The energizing unit energizes the base material portion to raise the temperature of the fine water particle release element so that the fine water particle release element releases fine water particles.

### Related Art Documents

### Patent Documents

Patent Document 1: Japanese Unexamined Patent Application Publication No. 2019-018195 (JP 2019-018195 A)

### SUMMARY OF THE INVENTION

### Problem to be Solved by the Invention

The above device merely de-energizes the substrate portion and does not control its temperature when adsorbing moisture. This accelerates moisture adsorption by the fine water particle release element, which may result in an excess amount of moisture in the fine water particle release element, so that adjacent ones of water particles adsorbed by the fine water particle release element may bond together. The bonded water particles are considered to be less likely to be released as fine water particles even if the temperature of the fine water particle release element rises.

A primary object of the present disclosure is to facilitate release of fine water particles in moisture desorption control by more appropriately performing moisture adsorption control.

### Means for Solving the Problem

The present disclosure took the following measures to achieve the above primary object.

A fine water particle release device of the present disclosure includes:
a fine water particle release element that includes a base material and an electrically conductive polymer membrane provided on the base material, and that changes to a moisture adsorbing state in which the electrically conductive polymer membrane adsorbs moisture in air and to a moisture desorbing state in which the electrically conductive polymer membrane desorbs the adsorbed moisture as fine water particles with a particle size of 50 nanometers or less; a supply unit that supplies energy to the fine water particle release element; and
a control unit that executes moisture adsorption control for controlling the supply unit to supply first energy that brings the fine water particle release element to the moisture adsorbing state, and moisture desorption control for controlling the supply unit to supply second energy that raises a temperature of the fine water particle release element to a temperature higher than a temperature of the fine water particle release element in the moisture adsorbing state to bring the fine water particle release element to the moisture desorbing state.

The fine water particle release device of the present disclosure executes the moisture adsorption control in which the first energy is supplied that brings the fine water particle release element into the moisture adsorbing state, and the moisture desorption control in which the second energy is supplied that raises the temperature of the fine water particle release element to a temperature higher than its temperature in the moisture adsorbing state to bring the fine water particle release element into the moisture desorbing state. Since energy is supplied in the moisture adsorption control, the temperature of the fine water particle release element is made higher than in moisture adsorption control in which no energy is supplied. It is therefore possible to control the amount of moisture that is adsorbed by the electrically conductive polymer membrane. This can reduce bonding of water particles and increase the adsorption proportion of water particles that will become fine water particles in the total amount of adsorbed moisture, which facilitates release of fine water particles in the moisture desorption control.

A fine water particle release method of the present disclosure is a fine water particle release method for causing fine water particles to be released from a fine water particle release element that includes a base material and an electrically conductive polymer membrane provided on the base material, the fine water particle release element being configured to change to a moisture adsorbing state in which the electrically conductive polymer membrane adsorbs moisture in air and to a moisture desorbing state in which the electrically conductive polymer membrane desorbs the adsorbed moisture as fine water particles with a particle size of 50 nanometers or less. The fine water particle release method includes: a moisture adsorption control step of controlling a supply unit to supply first energy that brings the fine water particle release element to the moisture adsorbing state; and a moisture desorption control step of controlling the supply unit to supply second energy that raises a temperature of the fine water particle release element to a temperature higher than a temperature of the fine water particle release element in the moisture adsorbing state to bring the fine water particle release element to the moisture desorbing state.

Like the fine water particle release device described above, the fine water particle release method of the present disclosure can reduce bonding of water particles and increase the adsorption proportion of water particles that will become fine water particles in the total amount of adsorbed moisture. This facilitates release of fine water particles in the moisture desorption control.

### BRIEF DESCRIPTION OF THE DRAWINGS

[FIG. 1] FIG. 1 is a schematic configuration diagram of a fine water particle release device 10.
[FIG. 2] FIG. 2 is a schematic configuration diagram of a fine water particle generation cartridge 30.
[FIG. 3] FIG. 3 is a schematic configuration diagram of a fine water particle release element 34.
[FIG. 4] FIG. 4 is a schematic diagram of an electrically conductive polymer membrane 36.
[FIG. 5] FIG. 5 is a flowchart showing an example of a fine water particle release process.
[FIG. 6] FIG. 6 is a flowchart showing an example of moisture adsorption control.
[FIG. 7] FIG. 7 is a flowchart showing an example of moisture desorption control.
[FIG. 8] FIG. 8 is a schematic diagram of the electrically conductive polymer membrane 36 in a moisture adsorbing state according to a comparative example.
[FIG. 9] FIG. 9 is a schematic diagram of the electrically conductive polymer membrane 36 in a moisture adsorbing state according to an embodiment.
[FIG. 10] FIG. 10 is an illustration showing an example of the relationship between temperature during moisture adsorption and ion current.
[FIG. 11] FIG. 11 is a flowchart showing a fine water particle release process according to a modification.
[FIG. 12] FIG. 12 is a flowchart showing moisture adsorption control according to the modification.
[FIG. 13] FIG. 13 is a schematic configuration diagram of a fine water particle release device 10B according to the modification.

### MODES FOR CARRYING OUT THE INVENTION

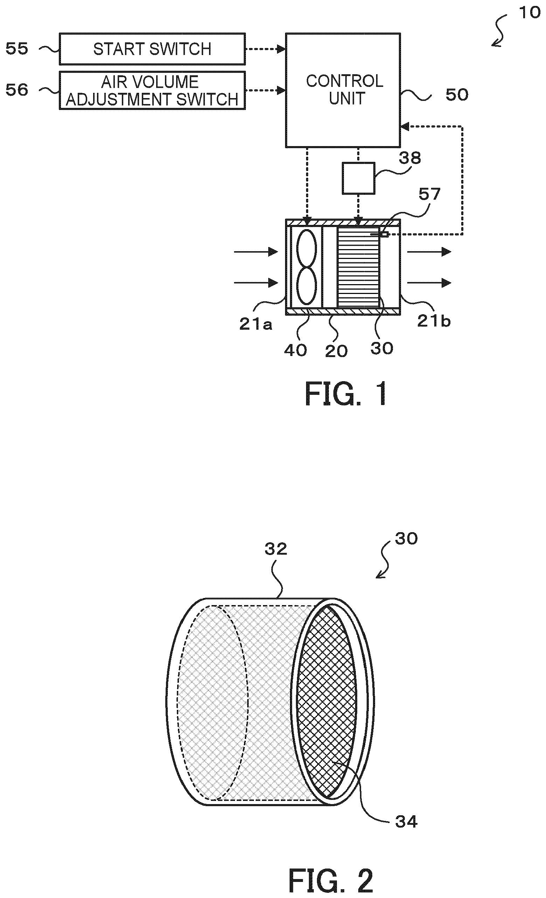

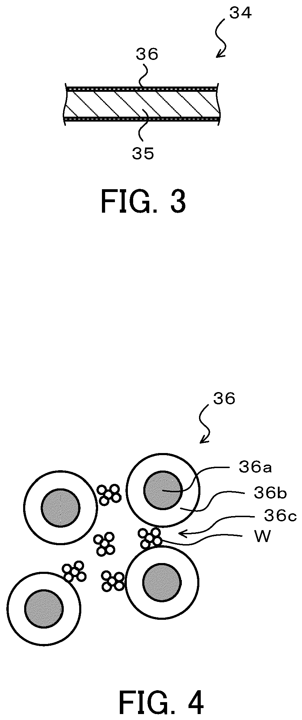

An embodiment of the present disclosure will be described with reference to the drawings. FIG. 1 is a schematic configuration diagram of a fine water particle release device 10. FIG. 2 is a schematic configuration diagram of a fine water particle generation cartridge 30. FIG. 3 is a schematic configuration diagram of a fine water particle release element 34. FIG. 4 is a schematic diagram of an electrically conductive polymer membrane 36. The fine water particle release device 10 is configured as, for example, beauty equipment or medical equipment that releases fine water particles toward a human body (skin, hair, etc.). As shown in FIG. 1, the fine water particle release device 10 includes a duct 20, the fine water particle generation cartridge (fine water particle release cartridge) 30, a fan 40, and a control unit 50. The fine water particle release device 10 is provided with various switches such as a start switch 55 for starting the operation of the fine water particle release device 10 and an air volume adjustment switch 56 for adjusting the air volume of the fan 40. The fine water particle release device 10 further includes an internal temperature sensor 57 that detects the internal temperature of the fine water particle generation cartridge 30.

The duct 20 is a member with a tubular shape, such as a cylindrical shape, that is open at both ends, and has an inlet 21a at one end and an outlet 21b at the other end. In the duct 20, the fan 40 and the fine water particle generation cartridge 30 are arranged in this order from the inlet 21a side.

As shown in FIG. 2, the fine water particle generation cartridge 30 includes a cylindrical case 32 with an outer diameter enough for the case 32 to be placed inside the duct 20, and the fine water particle release element (fine water particle generation element) 34 provided inside the case 32. As shown in FIG. 3, the fine water particle release element 34 includes a base material 35 and the electrically conductive polymer membrane 36 formed on the surface of the base material 35.

The base material 35 is made of an electrically conductive material such as a metal material like stainless steel-based metal or copper-based metal, a carbon material, or an electrically conductive ceramic material. Stainless steel metal foil containing aluminum is used in the present embodiment. The fine water particle release element 34 is formed in the form of a corrugated plate, a honeycomb, a spiral, etc. so as to allow air to pass therethrough and to maximize the surface area of the base material 35 (electrically conductive polymer membrane 36). An energizing circuit 38 (see FIG. 1) that operates based on control signals from the control unit 50 is connected to the base material 35. The energizing circuit 38 is configured to switch among a first energizing state (weakly energizing state) in which the energizing circuit 38 supplies a relatively small current to the base material 35, a second energizing state (strongly energizing state) in which the energizing circuit 38 supplies a relatively large current to the base material 35, and a deenergizing state in which the energizing circuit 38 cuts off current supply to the base material 35.

The electrically conductive polymer membrane 36 is made of an electrically conductive polymer compound such as a thiophene-based electrically conductive polymer. In the present embodiment, the electrically conductive polymer membrane 36 is made of PEDOT/PSS (poly(3,4-ethylenedioxythiophene)/poly(styrene sulfonate)) out of thiophene-based electrically conductive polymers. For example, the electrically conductive polymer membrane 36 is formed by dispersing PEDOT/PSS with a core-shell structure having cores of PEDOT and shells of sulfonic acid groups, namely an acidic functional group that can form hydrogen bonds, in a solvent such as water, applying the resultant dispersion to the outer surface of the base material 35, and drying it. Therefore, as shown in FIG. 4, the electrically conductive polymer membrane 36 contains PEDOT 36a as the cores and PSS 36b, namely a polymer material, as the shells covering the cores, and nanochannels 36c, namely nanometer-sized channels with a size of, for example, about 2 nanometers (nm), are formed between particles (between the shells). There are many sulfonic acid groups of the PSS 36b in the nanochannels 36c. Therefore, when the amount of moisture at the surface of the electrically conductive polymer membrane 36 is large and the amount of moisture inside the electrically conductive polymer membrane 36 is small, the moisture that is present at the surface of the electrically conductive polymer membrane 36 moves to the inside of the electrically conductive polymer membrane 36 via the sulfonic acid groups in the nanochannels 36c due to the difference in moisture concentration between the surface and inside of the electrically conductive polymer membrane 36. The electrically conductive polymer membrane 36 thus adsorbs water particles W as moisture.

When the amount of moisture at the surface is small and the amount of moisture inside is large with the moisture adsorbed inside, the moisture (water particles W) moves to the surface via the sulfonic acid groups in the nanochannels 36c due to the difference in moisture concentration between the surface and the inside. Moisture is thus released from the electrically conductive polymer membrane 36 as fine water particles. When the temperature of the electrically conductive polymer membrane 36 is raised, fast release of moisture (fine water particles) is facilitated compared to the case where moisture moves only due to the difference in moisture concentration. When the temperature of the electrically conductive polymer membrane 36 is lowered, fast adsorption of moisture is facilitated compared to the case where moisture moves only due to the difference in moisture concentration. As described above, the fine water particle generation cartridge 30 (fine water particle release element 34) changes to a moisture adsorbing state in which the electrically conductive polymer membrane 36 adsorbs moisture in air as the temperature lowers, and also changes to a moisture desorbing state in which the electrically conductive polymer membrane 36 desorbs the adsorbed moisture as the temperature rises. The thickness of the electrically conductive polymer membrane 36 can be determined as appropriate according to the required adsorption amount (release amount) of fine water particles. For example, when the electrically conductive polymer membrane 36 is formed with a thickness of 1 to 30 micrometers, it can adsorb the amount of moisture enough to release fine water particles in about a few seconds to several tens of seconds.

The fine water particle generation cartridge 30 releases fine water particles not electrically charged (non-charged fine water particles) having a particle size of 50 nanometers or less, for example, about 1 to 2 nanometers, from the electrically conductive polymer membrane 36 of the fine water particle release element 34. The reason for this particle size is considered to be because the size of the nanochannels 36c is 2 nanometers or less and therefore a phenomenon occurs that moisture is forced out of the nanochannels 36c due to an improved mobility and increased pressure of water inside the nanochannels 36c caused by an increase in temperature of the electrically conductive polymer membrane 36. Even if the water particles aggregate after being forced out, their particle size distribution is in the range of 50 nanometers or less. Generation of fine water particles by the fine water particle generation cartridge 30 (electrically conductive polymer membrane 36) is described in detail in WO2020/054100, JP 2019-018195 A, etc. filed by the applicant, and therefore will not be described in further detail.

The fan 40 is driven to rotate in a predetermined rotational speed, so that air introduced into the duct 20 through the inlet 21a can be passed through the fine water particle generation cartridge 30 and discharged from the outlet 21b. The fan 40 is driven by a motor, not shown, and is controlled by the control unit 50 by PWM (Pulse Width Modulation) control or voltage control etc. The fan 40 may be a propeller fan, a Sirocco fan, etc.

The control unit 50 is configured as a microprocessor having a CPU as a core component, and includes a ROM, a RAM, a timer, and input and output ports in addition to the CPU. The control unit 50 receives an operation signal from the start switch 55, an operation signal from the air volume adjustment switch 56, a detection signal from the internal temperature sensor 57 that detects the internal temperature of the fine water particle generation cartridge 30 such as the temperature of the fine water particle release element 34 (base material 35), etc. via the input port. The internal temperature sensor 57 may be, for example, a thermistor or a thermocouple. The control unit 50 outputs a drive signal for the motor that rotationally drives the fan 40, a drive signal for a switch of the energizing circuit 38, etc. through the output port.

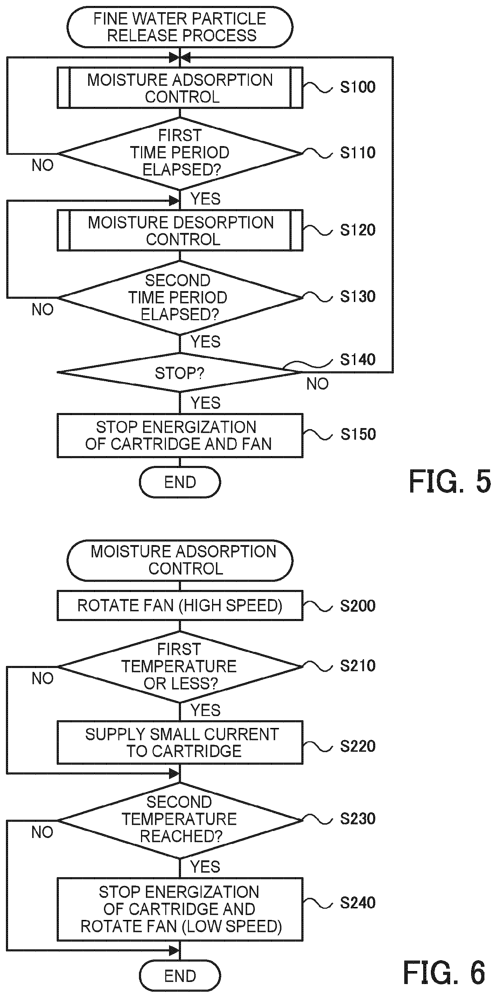

Next, the operation of the fine water particle release device 10 configured as described above will be described. FIG. 5 is a flowchart showing an example of a fine water particle release process. In this process, the control unit 50 executes moisture adsorption control for causing the fine water particle generation cartridge 30 (fine water particle release element 34) to adsorb moisture (S100), and determines whether a first time period has elapsed (S110). The first time period is a time period determined in advance as an execution time of the moisture adsorption control, and is set to a time period of about several minutes such as, for example, five minutes. When the control unit 50 determines that the first time period has not elapsed, the process returns to S100.

On the other hand, when the control unit 50 determines that the first time period has elapsed, the control unit 50 executes moisture desorption control for causing the fine water particle generation cartridge 30 (fine water particle release element 34) to release the adsorbed moisture as fine water particles (S120), and determines whether a second time period has elapsed (S130). The second time period is a time period determined in advance as an execution time of the moisture desorption control, and is set to a time period of about several minutes shorter than the first time period, such as, for example, two minutes. The second time period may be the same as the first time period. When the control unit 50 determines that the second time period has not elapsed, the process returns to S120.

When the control unit 50 determines that the second time period has elapsed, the control unit 50 determines whether it is time to stop the fine water particle release process (S140). When the control unit 50 determines that it is not time to stop the fine water particle release process, the process returns to S100, and the control unit 50 executes the moisture adsorption control. As described above, the control unit 50 executes the moisture adsorption control of S100 and the moisture desorption control of S120 while switching between these controls. The control unit 50 determines in S140 that it is time to stop when an execution time of the fine water particle release process set by the timer, not shown, has elapsed, when the number of times the moisture adsorption control and the moisture desorption control have been performed reaches a predetermined number of times, when a stop operation is performed by a user, etc. When the control unit 50 determines that it is time to stop, the control unit 50 stops energization of the fine water particle generation cartridge 30 and the fan 40 (S150) and ends the fine water particle release process. The moisture adsorption control in S100 and the moisture desorption control in S120 will be described in detail below.

The moisture adsorption control in S100 is executed based on the flowchart of FIG. 6. The control unit 50 first causes the fan 40 to rotate at a high speed so as to blow air at a relatively high wind speed (S200), and determines whether the temperature of the fine water particle release element 34 (base material 35) detected by the internal temperature sensor 57 is a first temperature or less (S210). The first temperature is set to a temperature higher than an ambient temperature that is the temperature around the fine water particle release device 10. In the present embodiment, the first temperature is set in advance to, for example, 50°C as a temperature that normally will not fall below the ambient temperature.

When the control unit 50 determines that the temperature of the fine water particle release element 34 is the first temperature or less, the control unit 50 outputs a control signal to the energizing circuit 38 to bring the energizing circuit 38 into the first energizing state (weakly energizing state) in which the energizing circuit 38 supplies a relatively small current (small current) to the base material 35. The control unit 50 thus causes the energizing circuit 38 to supply a small current to the fine water particle generation cartridge 30 (S220). When the control unit 50 determines that the temperature of the fine water particle release element 34 is not the first temperature or less, the process skips S220. When the moisture adsorption control is executed immediately after the start of the fine water particle release process, the control unit 50 normally determines in S210 that the temperature is the first temperature or less, and performs the energization in S220. As a result, the temperature of the fine water particle release element 34 rises.

Next, the control unit 50 determines whether the temperature of the fine water particle release element 34 detected by the internal temperature sensor 57 has reached a second temperature (S230). The second temperature is set in advance to a temperature that is about several degrees Celsius higher than the first temperature, such as, for example, 55°C. When the control unit 50 determines that the temperature of the fine water particle release element 34 has not reached the second temperature, the control unit 50 ends the moisture adsorption control. On the other hand, when the control unit 50 determines that the temperature of the fine water particle release element 34 has reached the second temperature, the control unit 50 stops energization of the fine water particle generation cartridge 30 and causes the fan 40 to rotate at a low speed so as to blow air at a relatively low wind speed (predetermined wind speed) (S240), and ends the moisture adsorption control. That is, when the temperature of the fine water particle release element 34 becomes equal to or higher than the second temperature, the control unit 50 stops energization of the fine water particle generation cartridge 30 and causes the fan 40 to rotate at a low speed. This can reduce the possibility of the temperature of the fine water particle release element 34 being raised to a temperature higher than the second temperature even when energization of the fine water particle generation cartridge 30 is started in S220.

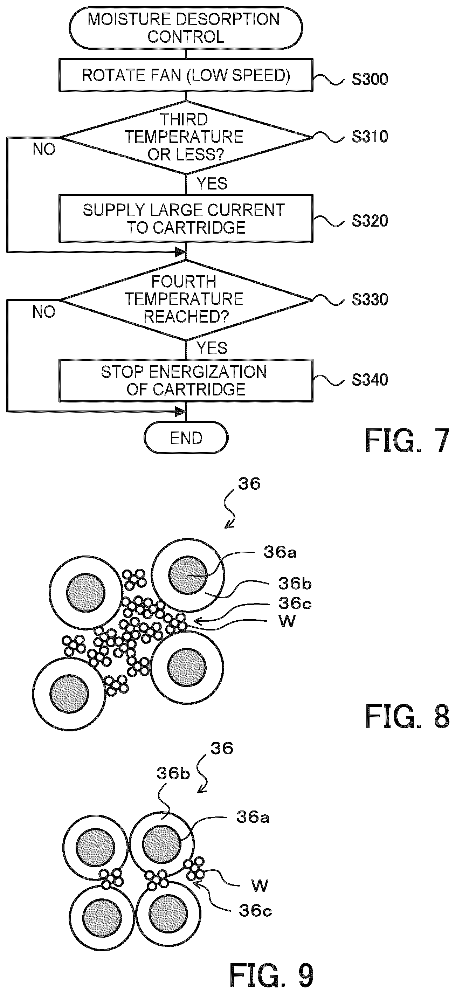

The moisture desorption control in S120 is executed based on the flowchart of FIG. 7. First, the control unit 50 causes the fan 40 to rotate at a low speed so as to blow air at a relatively low wind speed (predetermined wind speed) (S300). In S300, the control unit 50 need only to cause the fan 40 to rotate at a lower speed than in S200, and in the present embodiment, the control unit 50 causes the fan 40 to rotate at the same speed as in S240. Next, the control unit 50 determines whether the temperature of the fine water particle release element 34 detected by the internal temperature sensor 57 is a third temperature or less (S310). The third temperature is set in advance to a temperature higher than the second temperature described above, such as, for example, 65°C.

When the control unit 50 determines that the temperature of the fine water particle release element 34 is the third temperature or less, the control unit 50 outputs a control signal to the energizing circuit 38 to bring the energizing circuit 38 into the second energizing state (strongly energizing state) in which the energizing circuit 38 supplies a relatively large current (large current) to the base material 35. The control unit 50 thus causes the energizing circuit 38 to supply a large current to the fine water particle generation cartridge 30 (S320). That is, in the moisture desorption control, the control unit 50 causes a current larger than in the moisture adsorption control to be supplied to the fine water particle generation cartridge 30 to raise the temperature of the fine water particle release element 34 to a temperature higher than that of the fine water particle release element 34 in the moisture adsorbing state. When the control unit 50 determines that the temperature of the fine water particle release element 34 is not the third temperature or less, the process skips S320. The third temperature is a temperature higher than the second temperature. Therefore, when the control unit 50 switches from the moisture adsorption control to the moisture desorption control, the control unit 50 determines in S310 that the temperature is the third temperature or less, and causes a large current to be supplied to the fine water particle generation cartridge 30 in S320.

The control unit 50 then determines whether the temperature of the fine water particle release element 34 detected by the internal temperature sensor 57 has reached a fourth temperature (S330). The fourth temperature is set in advance to a temperature that is about several to ten degrees Celsius higher than the third temperature, such as, for example, 75°C. When the control unit 50 determines that the temperature of the fine water particle release element 34 has not reached the fourth temperature, the control unit 50 ends the moisture desorption control. On the other hand, when the control unit 50 determines that the temperature of the fine water particle release element 34 has reached the fourth temperature, the control unit 50 stops energization of the fine water particle generation cartridge 30 (S340) and ends the moisture desorption control. That is, when the temperature of the fine water particle release element 34 becomes equal to or higher than the fourth temperature, the control unit 50 stops energization of the fine water particle generation cartridge 30. This can reduce the possibility of the temperature of the fine water particle release element 34 being raised to a temperature higher than the fourth temperature.

When the control unit 50 determines in S130 that the second time period has elapsed and then determines in S140 that it is not time to stop, the control unit 50 switches to the moisture adsorption control in S100 (FIG. 5). In the moisture adsorption control, the control unit 50 causes the fan 40 to rotate at a high speed in S200. Therefore, the fine water particle release element 34 whose temperature has been raised to a temperature between the third temperature and the fourth temperature can be quickly cooled. The control unit 50 causes the fan 40 to rotate at the high speed until the temperature of the fine water particle release element 34 is lowered to the second temperature. When the control unit 50 determines in S230 that the temperature of the fine water particle release element 34 has reached the second temperature, the control unit 50 causes the fan 40 to rotate at a low speed in S240. As described above, the control unit 50 executes the moisture adsorption control between the first temperature and the second temperature (e.g., 50°C to 55°C) and the moisture desorption control between the third temperature and the fourth temperature (e.g., 65°C to 75°C) while switching between these controls. Therefore, the temperature difference between moisture adsorption and moisture desorption is about 10 to 20°C. When the temperature in the moisture adsorption lowers by about 10 to 20°C from the temperature in the moisture desorption, the fine water particle release element 34 can appropriately change to the moisture adsorbing state and adsorb fine water particles even at a temperature higher than room temperature such as about 25°C.

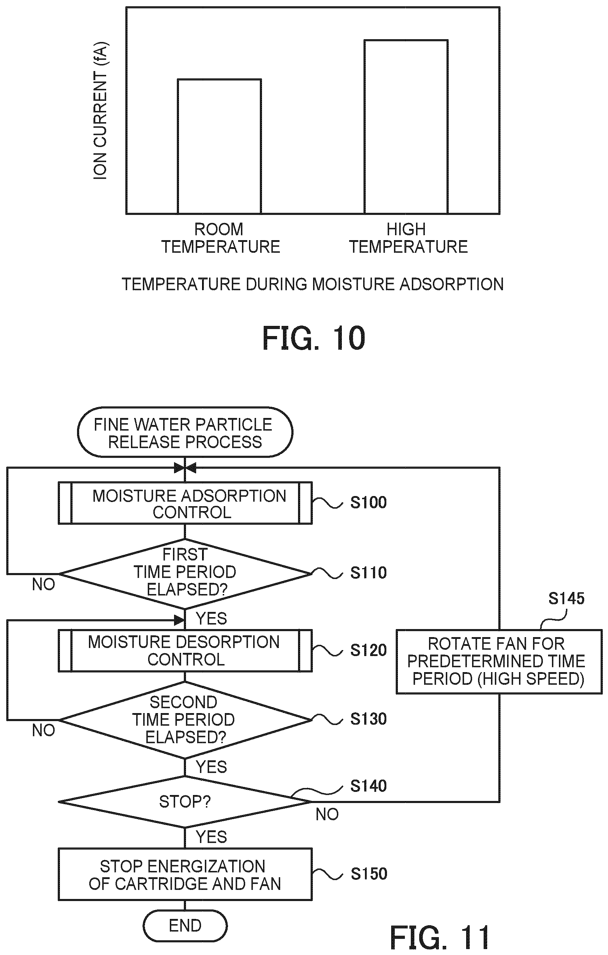

FIG. 8 is a schematic diagram of the electrically conductive polymer membrane 36 in the moisture adsorbing state according to a comparative example. FIG. 9 is a schematic diagram of the electrically conductive polymer membrane 36 in the moisture adsorbing state according to the present embodiment. FIG. 10 is an illustration showing an example of the relationship between temperature during moisture adsorption and ion current. In the comparative example, no current is applied to the fine water particle generation cartridge 30 (base material 35) in the moisture adsorption control, and the moisture adsorption control is performed with the temperature of the fine water particle release element 34 (base material 35) being room temperature such as, for example, about 25°C. In the present embodiment, as described above, the moisture adsorption control is performed with the temperature of the fine water particle release element 34 being relatively high such as 50 to 55°C. The left bar graph in FIG. 10 shows the comparative example, and indicates an ion current detected when, for example, the moisture adsorption control was executed at room temperature of about 25°C and the moisture desorption control was executed at about 45°C. The right bar graph in FIG. 10 shows the present embodiment, and indicates an ion current detected when, for example, the moisture adsorption control was executed at a high temperature of about 55°C and the moisture desorption control was executed at about 67°C. The amount of released fine water particles was obtained by passing fine water particles released from the fine water particle release element 34 through a neutralizer to electrically charge the fine water particles, measuring the electrical mobility of the electrically charged fine water particles with a differential mobility analyzer to classify the electrically charged fine water particles, and measuring a current (electric charge) of the fine water particles of 50 nanometers or less. A larger ion current indicates that a larger amount of fine water particles is released in the moisture desorption control.

As shown in FIG. 8, in the comparative example, there are many sites in the nanochannels 36c that can adsorb water. Therefore, a relatively large amount of water is adsorbed. Accordingly, it is considered that water particles W of adjacent sulfonic acid groups bond together to form bulk water and the nanochannels 36c are filled with moisture. It is considered that the bonded water particles W are less likely to be present in the form of clusters with a particle size of about 2 nanometers or less and are less likely to be released as fine water particles in the moisture desorbing state. As a result, a smaller amount of fine water particles of 50 nanometers or less is released (see FIG. 10).

As shown in FIG. 9, on the other hand, in the present embodiment, the fine water particle release element 34 is in a high temperature state due to the moisture adsorption control, so that the shells (PSS 36b) contract and at the same time the nanochannels 36c becomes smaller. It is therefore considered that the number of sites in the nanochannels 36c that can adsorb water is smaller and the total amount of moisture that can be adsorbed is smaller than in the comparative example. Since adjacent water particles W are less likely to bond together, a larger number of water particles W are considered to be present in the form of clusters with a particle size of about 2 nanometers or less. As a result, a larger amount of fine water particles of 50 nanometers or less is released in the moisture desorbing state than in the comparative example (see FIG. 10). Although not shown in the figures, when the temperature of the fine water particle release element 34 further rises in the moisture desorbing state, the PSS 36b of the shells further contracts. In the moisture desorption control, the temperature rise, the contraction of the shells (PSS 36b), and the above-described difference in moisture concentration between the surface and inside of the element facilitates release of minute water particles from the nanochannels 36c.

The fine water particle release device 10 releases fine water particles toward the skin, hair, etc. of a human body. The stratum corneum at the surface of the skin has fine pores of about 20 to 50 nanometers or less. Such fine pores facilitate penetration of fine water particles with a particle size of 50 nanometers or less into the skin through the stratum corneum. Similarly for the hair, the cuticle at the surface of a hair strand also has fine pores. Such fine pores facilitate penetration of fine water particles with a particle size of 50 nanometers or less into the hair strand. The fine water particle release device 10 of the present embodiment makes it easier for water particles W to be present with a particle size of 50 nanometers or less during moisture adsorption, compared to the conventional example. This facilitates release of fine water particles of 50 nanometers or less during moisture desorption and more effectively allows the fine water particles to penetrate the skin or hair. This allows the fine water particles to sufficiently penetrate the skin or hair and improves their moisturizing capacity.

The fine water particle release device 10 of the present embodiment described above executes the moisture adsorption control in which a small current is supplied to the fine water particle release element 34 to bring the fine water particle release element 34 into the moisture adsorbing state, and the moisture desorption control in which a large current is supplied to the fine water particle release element 34 to raise its temperature to a temperature higher than its temperature in the moisture adsorbing state to bring the fine water particle release element 34 into the moisture desorbing state. Accordingly, compared to the case where the fine water particle release element 34 is not energized in the moisture adsorption control, the amount of moisture that is adsorbed by the electrically conductive polymer membrane 36 is controlled to reduce bonding of water particles W, so that the adsorption proportion of water particles W that will become fine water particles in the total amount of adsorbed moisture can be increased. This can facilitate appropriate release of fine water particles.

In the moisture adsorption control, the control unit 50 starts supplying a small current to the fine water particle release element 34 when the temperature of the fine water particle release element 34 is the first temperature or less, and stops supplying the current to the fine water particle release element 34 when the temperature of the fine water particle release element 34 is the second temperature or more. This reduces the possibility of the fine water particle release element 34 becoming too hot to adsorb moisture.

In the moisture desorption control, the control unit 50 starts supplying a large current to the fine water particle release element 34 when the temperature of the fine water particle release element 34 is the third temperature or less, and stops supplying the current to the fine water particle release element 34 when the temperature of the fine water particle release element 34 is the fourth temperature or more. This provides a sufficient temperature difference from the moisture adsorption control, so that an excessive temperature increase can be reduced while performing appropriate moisture adsorption and desorption.

The control unit 50 causes the fan 40 to rotate at a low speed in the moisture desorption control, and causes the fan 40 to rotate at a high speed when starting the moisture adsorption control. This facilitates cooling of the fine water particle release element 34 to quickly bring the fine water particle release element 34 into the moisture adsorbing state in the moisture adsorption control after the moisture desorption control.

When the fine water particle release element 34 is the moisture adsorbing state, the PSS 36b of the shells contracts, which reduces the amount of moisture that is adsorbed in the nanochannels 36c. Therefore, the total amount of moisture that is adsorbed is reduced but the proportion of water particles W that will become fine water particles is increased compared to the case where adsorption is caused at room temperature. In the moisture desorbing state, the PSS 36b of the shells of the fine water particle release element 34 further contracts, and the fine water particle release element 34 releases fine water particles from the nanochannels 36c due to the difference in moisture concentration between the surface and inside of the element. The fine water particle release device 10 thus allows the fine water particle release element 34 having the electrically conductive polymer membrane 36 with a core-shell structure to function more appropriately to adsorb and desorb moisture.

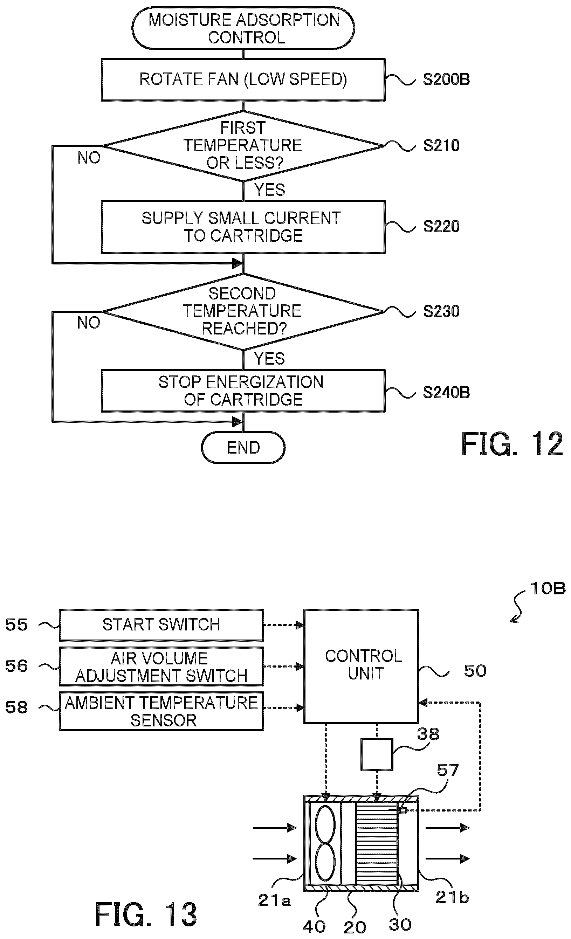

In the present embodiment, the fan 40 is rotated at a high speed in S200 of the moisture adsorption control. However, in the moisture adsorption control immediately after the start of the fine water particle release process (first moisture adsorption control), it is normally not necessary to operate the fan 40 at a high speed for cooling. Therefore, S200 may be omitted. The present disclosure is not limited to the fan 40 being rotated at a high speed in the moisture adsorption control, and the moisture adsorption control may alternatively executed as follows. FIG. 11 is a flowchart showing a fine water particle release process according to a modification. FIG. 12 is a flowchart showing moisture adsorption control according to the modification. In the following modification, the same processes as those of the embodiment are denoted by the same step numbers as those of the embodiment, and description thereof will be omitted.

In the fine water particle release process of the modification in FIG. 11, when the control unit 50 determines in S140 that it is not time to stop, the control unit 50 performs cooling control for causing the fan 40 to rotate at a high speed for a predetermined time period (S145), and then switches to the moisture adsorption control of S100. That is, this fine water particle release process is different from the fine water particle release process of the embodiment (FIG. 5) in that the fan 40 is rotated at a high speed for the predetermined time period to cool the fine water particle generation cartridge 30 (fine water particle release element 34) before switching from the moisture desorption control to the moisture adsorption control. The predetermined time period in the cooling control of S145 is determined in advance as a time required to cool the fine water particle release element 34 whose temperature has become relatively high in the moisture adsorption control to the temperature in the moisture adsorbing state. The control unit 50 may cause the fan 40 to rotate at a high speed until it is detected, based on the temperature detected by the internal temperature sensor 57, that the temperature of the fine water particle release element 34 has reached the temperature in the moisture adsorbing state (e.g., the second temperature or less), and then switch to the moisture adsorption control of S100.

In the moisture adsorption control of the modification in FIG. 12, the control unit 50 first causes the fan 40 to rotate at a low speed so as to blow air at a relatively low wind speed (predetermined wind speed) (S200B). When the control unit 50 determines in S230 that the temperature of the fine water particle release element 34 has reached the second temperature, the control unit 50 stops energization of the fine water particle generation cartridge 30 (S240B), and ends the moisture adsorption control. As described above, in the moisture adsorption control of the modification, the fan 40 is rotated at a low speed when the moisture adsorption control is started, and the fan 40 is not stopped and is kept rotating at the low speed when the moisture adsorption control is ended.

In this modification, cooling of the fine water particle release element 34 can be facilitated by rotating the fan 40 at a high speed for the predetermined time period before starting the moisture adsorption control. This allows the fine water particle release element 34 to have the temperature in the moisture adsorbing state at the start of the moisture adsorption control, so that the fine water particle release element 34 can quickly adsorb moisture. Even in the moisture adsorption control that is executed immediately after the start of the fine water particle release process, the fan 40 is rotated at a low speed to allow the temperature of the fine water particle release element 34 to quickly rise to a temperature between the first temperature and the second temperature. Appropriate moisture adsorption with reduced bonding of water particles W can thus be quickly started.

In the moisture adsorption control, the fine water particle release element 34 may adsorb moisture in about several seconds to several tens of seconds after the temperature of the fine water particle release element 34 reaches the second temperature. Therefore, in the case where the temperature of the fine water particle release element 34 reaches the second temperature and moisture is adsorbed by the fine water particle release element 34 during the first time period (S110) in which the moisture adsorption control is executed, there is no need to provide the cooling control (S145) between the moisture adsorption control and the moisture desorption control.

In the embodiment, the predetermined temperatures are used as the first to fourth temperatures. However, the present disclosure is not limited to this, and temperatures set based on the ambient temperature that is the temperature around the fine water particle release device 10 and the fine water particle generation cartridge 30 may be used. FIG. 13 is a schematic configuration diagram of a fine water particle release device 10B according to the modification. This fine water particle release device 10B includes an ambient temperature sensor 58 that detects an ambient temperature that is the temperature around the fine water particle release device 10. The control unit 50 can set the first to fourth temperatures based on the ambient temperature detected by the ambient temperature sensor 58. For example, the control unit 50 may set the first temperature by adding a temperature of about several tens of degrees Celsius such as 20°C to 30°C (first predetermined temperature) to the ambient temperature detected by the ambient temperature sensor 58, and may set the second temperature by adding a temperature of about several to tens degrees Celsius (second predetermined temperature) to the first temperature. The control unit 50 may set the third temperature by adding a temperature of about ten to dozen degrees Celsius (third predetermined temperature) to the second temperature, and may set the fourth temperature by adding a temperature of about several to over ten degrees Celsius (fourth predetermined temperature) to the third temperature.

The control unit 50 may selectively set the first to fourth temperatures based on the ambient temperature detected by the ambient temperature sensor 58. For example, the control unit 50 sets the first temperature, the second temperature, the third temperature, and the fourth temperature to a temperature 1A, a temperature 2A, a temperature 3A, and a temperature 4A, respectively, when the ambient temperature is low, and sets the first temperature, the second temperature, the third temperature, and the fourth temperature to a temperature 1B, a temperature 2B, a temperature 3B, and a temperature 4B, respectively, when the ambient temperature is high. These temperatures are, from lowest to highest, the temperature 1A, the temperature 1B, the temperature 2A, the temperature 2B, the temperature 3A, the temperature 3B, the temperature 4A, and the temperature 4B, and can be determined in advance and stored in a memory unit such as a ROM of the control unit 50. The control unit 50 may change the settings of the first to fourth temperatures according to a change in ambient temperature while the fine water particle release process is being performed.

The embodiment illustrates an example in which the wind speed of the fan 40 is changed between two levels. However, the present disclosure is not limited to this, and the wind speed may be changed among a plurality of levels, namely three or more levels.

In the embodiment, the control unit 50 ends energization when the second temperature is reached (when the temperature becomes equal to or higher than the second temperature) during the moisture adsorption control. However, the present disclosure is not limited to this, and the amount of energization may be reduced so as to reduce a temperature rise. The control unit 50 ends energization when the fourth temperature is reached (when the temperature becomes equal to or higher than the fourth temperature) during the moisture desorption control. However, the present disclosure is not limited to this, and the amount of energization may be reduced so as to reduce a temperature rise.

The embodiment illustrates an example in which electrical energy is supplied as power, namely energy, that is supplied to the base material 35 to raise the temperature of the fine water particle release element 34. However, the present disclosure is not limited to this, and thermal energy from a heat source (supply unit) may be supplied, or both the electrical energy and the thermal energy may be supplied. First energy need only be supplied to the fine water particle release element 34 in the moisture adsorption control, and such second energy that makes the temperature higher than in the moisture adsorption control need only be supplied to the fine water particle release element 34 in the moisture desorption control. The type of energy that is supplied may be different between the moisture adsorption control and the moisture desorption control. Alternatively, the first energy may be supplied to the fine water particle release element 34 from one supply unit in the moisture adsorption control, and the second energy may be supplied to the fine water particle release element 34 from two or more supply units in the moisture desorption control.

The correspondence between the main elements of the embodiment and the main elements of the present disclosure described in the section "Means for Solving the Problem" will be described. The fine water particle release device 10 of the embodiment corresponds to the "fine water particle release device" of the present disclosure, the fine water particle release element 34 corresponds to the "fine water particle release element," and the control unit 50 corresponds to the "control unit." The internal temperature sensor 57 corresponds to the "temperature sensor." The fan 40 corresponds to the "blower unit." The present embodiment also discloses an example of a fine water particle release method of the present disclosure by describing the operation of the fine water particle release device 10.

As described above, a fine water particle release device (10) of the present disclosure includes: a fine water particle release element (34) that includes a base material (35) and an electrically conductive polymer membrane (36) provided on the base material (35), and that changes to a moisture adsorbing state in which the electrically conductive polymer membrane (36) adsorbs moisture in air and to a moisture desorbing state in which the electrically conductive polymer membrane (36) desorbs the adsorbed moisture as fine water particles with a particle size of 50 nanometers or less; a supply unit (38) that supplies energy to the fine water particle release element (34); and a control unit (50) that executes moisture adsorption control for controlling the supply unit (38) to supply first energy that brings the fine water particle release element (34) to the moisture adsorbing state, and moisture desorption control for controlling the supply unit (38) to supply second energy that raises a temperature of the fine water particle release element (34) to a temperature higher than a temperature of the fine water particle release element (34) in the moisture adsorbing state to bring the fine water particle release element (34) to the moisture desorbing state.

The fine water particle release device of the present disclosure executes the moisture adsorption control in which the first energy is supplied that brings the fine water particle release element into the moisture adsorbing state, and the moisture desorption control in which the second energy is supplied that raises the temperature of the fine water particle release element to a temperature higher than its temperature in the moisture adsorbing state to bring the fine water particle release element into the moisture desorbing state. Since energy is supplied in the moisture adsorption control, the temperature of the fine water particle release element is made higher than in moisture adsorption control in which no energy is supplied. It is therefore possible to control the amount of moisture that is adsorbed by the electrically conductive polymer membrane. This can reduce bonding of water particles and increase the adsorption proportion of water particles that will become fine water particles in the total amount of adsorbed moisture, which facilitates release of fine water particles in the moisture desorption control.

The fine water particle release device of the present disclosure may further include a temperature sensor (57) that detects the temperature of the fine water particle release element (34). In the moisture adsorption control, the control unit (50) may control the supply unit (38) to start supplying the first energy when the temperature of the fine water particle release element (34) is equal to or less than a first temperature and to stop supplying the first energy when the temperature of the fine water particle release element (34) is equal to or higher than a second temperature that is higher than the first temperature. The temperature of the fine water particle release element can thus be kept in an appropriate range in the moisture adsorption control, so that bonding of water particles inside the fine water particle release element can be appropriately reduced.

In the moisture desorption control, the control unit (50) may control the supply unit (38) to start supplying the second energy when the temperature of the fine water particle release element (34) is equal to or less than a third temperature that is higher than the second temperature and to stop supplying the second energy when the temperature of the fine water particle release element (34) is equal to or higher than a fourth temperature that is higher than the third temperature. Moisture adsorption and desorption can thus be appropriately switched using the difference in temperature of the fine water particle release element between the moisture adsorption control and the moisture desorption control. An excess temperature increase of the fine water particle release element can also be reduced.

The fine water particle release device of the present disclosure may further include a blower unit (40) that blows air in such a manner that the air passes through the fine water particle release element (34). In the moisture desorption control, the control unit (50) may control the blower unit (40) so as to blow the air at a predetermined wind speed. When the control unit (50) switches from the moisture desorption control to the moisture adsorption control or before the control unit (50) switches to the moisture adsorption control, the control unit (50) may control the blower unit (40) so as to blow the air at a wind speed higher than the predetermined wind speed. This can facilitate cooling of the fine water particle release element. Therefore, the fine water particle release element can be quickly changed to the moisture adsorbing state after the moisture desorption control.

The fine water particle release device of the present disclosure may further include an ambient temperature sensor (58) that detects an ambient temperature, and the control unit (50) may adjust the first energy according to the ambient temperature.

The fine water particle release device of the present disclosure may further include an ambient temperature sensor (58) that detects an ambient temperature, and the control unit (50) may set the first temperature to a temperature obtained by adding a first predetermined temperature to the ambient temperature, and may set the second temperature to a temperature obtained by adding a second predetermined temperature to the first temperature.

The control unit (50) may set the third temperature to a temperature obtained by adding a third predetermined temperature to the second temperature, and may set the fourth temperature to a temperature obtained by adding a fourth predetermined temperature to the third temperature.

The present specification also discloses a technical idea of changing the "fine water particle release device according to claim 1 or 2" in original claim 4 to the "fine water particle release device according to any one of claims 1 to 3."

Since the embodiment is an example for specifically illustrating the mode for carrying out the present disclosure described in the section "Means for Solving the Problem." Therefore, the correspondence between the main elements of the embodiment and the main elements of the present disclosure described in the section "Means for Solving the Problem" is not intended to limit the elements of the present disclosure described in the section "Means for Solving the Problem." In other words, the present disclosure described in the section "Means for Solving the Problem" should be interpreted based on the description in that section, and the embodiment is merely a specific example of the present disclosure described in the section "Means for Solving the Problem."

Although the mode for carrying out the present disclosure is described above, it should be understood that the present disclosure is not limited to the embodiment in any way and may be carried out in various forms without departing from the spirit and scope of the present disclosure.

### INDUSTRIAL APPLICABILITY

The present disclosure is applicable in technical fields such as discharging fine water particles from a fine water particle release element.

### Description of the Reference Numerals

10, 10B fine water particle release device, 20 duct, 21a inlet, 21b outlet, 30 fine water particle generation cartridge, 32 case, 34 fine water particle release element (fine water particle generation element), 35 base material, 36 electrically conductive polymer membrane, 36a PEDOT, 36b PSS, 36c nanochannel, 38 energizing circuit (supply unit), 40 fan (blower unit), 50 control unit, 55 start switch, 56 air volume adjustment switch, 57 internal temperature sensor, 58 ambient temperature sensor, W water particle.

## Claims

1. A fine water particle release device comprising:
a fine water particle release element that includes a base material and an electrically conductive polymer membrane provided on the base material, and that changes to a moisture adsorbing state in which the electrically conductive polymer membrane adsorbs moisture in air and to a moisture desorbing state in which the electrically conductive polymer membrane desorbs the adsorbed moisture as fine water particles with a particle size of 50 nanometers or less;
a supply unit that supplies energy to the fine water particle release element; and
a control unit that executes moisture adsorption control for controlling the supply unit to supply first energy that brings the fine water particle release element to the moisture adsorbing state, and moisture desorption control for controlling the supply unit to supply second energy that raises a temperature of the fine water particle release element to a temperature higher than a temperature of the fine water particle release element in the moisture adsorbing state to bring the fine water particle release element to the moisture desorbing state.

2. The fine water particle release device according to claim 1, further comprising a temperature sensor that detects the temperature of the fine water particle release element, wherein in the moisture adsorption control, the control unit controls the supply unit to start supplying the first energy when the temperature of the fine water particle release element is equal to or less than a first temperature and to stop supplying the first energy when the temperature of the fine water particle release element is equal to or higher than a second temperature that is higher than the first temperature.

3. The fine water particle release device according to claim 2, wherein in the moisture desorption control, the control unit controls the supply unit to start supplying the second energy when the temperature of the fine water particle release element is equal to or less than a third temperature that is higher than the second temperature and to stop supplying the second energy when the temperature of the fine water particle release element is equal to or higher than a fourth temperature that is higher than the third temperature.

4. The fine water particle release device according to claim 1 or 2, further comprising a blower unit that blows air in such a manner that the air passes through the fine water particle release element, wherein in the moisture desorption control, the control unit controls the blower unit so as to blow the air at a predetermined wind speed, and when the control unit switches from the moisture desorption control to the moisture adsorption control or before the control unit switches to the moisture adsorption control, the control unit controls the blower unit so as to blow the air at a wind speed higher than the predetermined wind speed.

5. The fine water particle release device according to claim 1, further comprising an ambient temperature sensor that detects an ambient temperature, wherein the control unit adjusts the first energy according to the ambient temperature.

6. The fine water particle release device according to claim 2, further comprising an ambient temperature sensor that detects an ambient temperature, wherein the control unit sets the first temperature to a temperature obtained by adding a first predetermined temperature to the ambient temperature, and sets the second temperature to a temperature obtained by adding a second predetermined temperature to the first temperature.

7. The fine water particle release device according to claim 3, wherein the control unit sets the third temperature to a temperature obtained by adding a third predetermined temperature to the second temperature, and sets the fourth temperature to a temperature obtained by adding a fourth predetermined temperature to the third temperature.

8. A fine water particle release method for causing fine water particles to be released from a fine water particle release element that includes a base material and an electrically conductive polymer membrane provided on the base material, the fine water particle release element being configured to change to a moisture adsorbing state in which the electrically conductive polymer membrane adsorbs moisture in air and to a moisture desorbing state in which the electrically conductive polymer membrane desorbs the adsorbed moisture as fine water particles with a particle size of 50 nanometers or less, the fine water particle release method comprising:
a moisture adsorption control step of controlling a supply unit to supply first energy that brings the fine water particle release element to the moisture adsorbing state; and
a moisture desorption control step of controlling the supply unit to supply second energy that raises a temperature of the fine water particle release element to a temperature higher than a temperature of the fine water particle release element in the moisture adsorbing state to bring the fine water particle release element to the moisture desorbing state.

9. The fine water particle release method according to claim 8, wherein in the moisture adsorption control step, the supply unit is controlled to start supplying the first energy when the temperature of the fine water particle release element detected by a temperature sensor is equal to or less than a first temperature and to stop supplying the first energy when the temperature of the fine water particle release element is equal to or higher than a second temperature that is higher than the first temperature.

10. The fine water particle release method according to claim 9, wherein in the moisture desorption control, the supply unit is controlled to start supplying the second energy when the temperature of the fine water particle release element is equal to or less than a third temperature that is higher than the second temperature and to stop supplying the second energy when the temperature of the fine water particle release element is equal to or higher than a fourth temperature that is higher than the third temperature.

11. The fine water particle release method according to claim 8 or 9, wherein:
in the moisture desorption control step, a blower unit that blows air in such a manner that the air passes through the fine water particle release element is controlled so as to blow the air at a predetermined wind speed; and
when switching from the moisture desorption control step to the moisture adsorption control step or before switching to the moisture adsorption control step, the blower unit is controlled so as to blow the air at a wind speed higher than the predetermined wind speed.

12. The fine water particle release method according to claim 8, wherein in the moisture adsorption control step, the first energy is adjusted according to an ambient temperature detected by an ambient temperature sensor.

13. The fine water particle release method according to claim 9, wherein in the moisture adsorption control step, the first temperature is set to a temperature obtained by adding a first predetermined temperature to an ambient temperature detected by an ambient temperature sensor, and the second temperature is set to a temperature obtained by adding a second predetermined temperature to the first temperature.

14. The fine water particle release method according to claim 10, wherein in the moisture desorption control step, the third temperature is set to a temperature obtained by adding a third predetermined temperature to the second temperature, and the fourth temperature is set to a temperature obtained by adding a fourth predetermined temperature to the third temperature.
